# EUROPEAN PATENT SPECIFICATION

(11) **EP 0 318 638 B1**
(45) Date of publication and mention of the grant of the patent: **20.11.1996**
(21) Application number: 88112322.8
(22) Date of filing: 29.07.1988
(51) Int. Cl.: F04D 13/04, F04D 29/04

(54) **Containment assembly**
Einschlussaufbau
Assemblage détenteur

(30) Priority: 03.12.1987 US 128560
(43) Date of publication of application: 07.06.1989
(73) Proprietor: ROCKWELL INTERNATIONAL CORPORATION, El Segundo California 90245 (US)
(72) Inventor: Sutton, Robert Frederick, Newbury Park California 91320 (US); Beatty, Robert Francis, West Hills California 91304 (US)
(74) Representative: Wächtershäuser, Günter, Prof. Dr.

(56) References cited:
- BE-A- 382 921
- FR-A- 716 181
- FR-A- 885 658
- US-A- 2 475 316

## Description

### 1. Field of the Invention

The present invention relates to high speed turbopumps and more particularly, to the replacement of standard rolling element bearings normally employed to fulfill rotor radial and axial support requirements and which limit the turbopumps functional life.

### 2. Description of the Prior Art

In known high speed turbomachinery, angular contact ball bearings have been utilized in supporting the rotor under high radial and axial loading. In some turbopumps load sharing seals in parallel with mechanical rolling element bearings have been utilized to limit radial loading. However, in some cases these seals cannot carry all the load required to extend the actual life beyond the desired operational life, thus bearing failure may still occur. These features are found in the following prior art references: US-A-3 360 310; 3 642 331; 3 655 226; 3 708 215; 4 265 498; 4 394 091; 4 641 978; JP-B-0 163 720; SU-B-0 393 497.

US-A-2475316 discloses a fluid pumping system which is adapted for pumping liquid oxygen. The system is provided with a self-aligning assembly construction between elements of this system.

### Objects of the Invention

Accordingly, it is a primary object of the present invention to provide a turbopump having means for centering the rotor rotating assembly between the stator elements with the use of fluid film bearings and seals, while maintaining axial and radial restraints during turbopump startup and shutdown.

It is yet another object of the present invention to provide a turbopump assembly which limits the use of rolling element bearings.

### Summary of the Invention

All of these and other objects are achieved by the present invention which provides a rotating assembly including a pump section and a turbine section interconnected by a common shaft. At opposing ends of the shaft in the pump section and turbine section respectively, there is provided a shaft centerline containment assembly which provides axial and radial restraint at startup and shutdown of the turbopump while becoming disengaged during steady state operation.

The foregoing and other objects, features and advantages of the present invention will become more apparent in light of the following detailed description of the preferred embodiment thereof as illustrated in the accompanying drawing.

### Brief Description of the Drawing

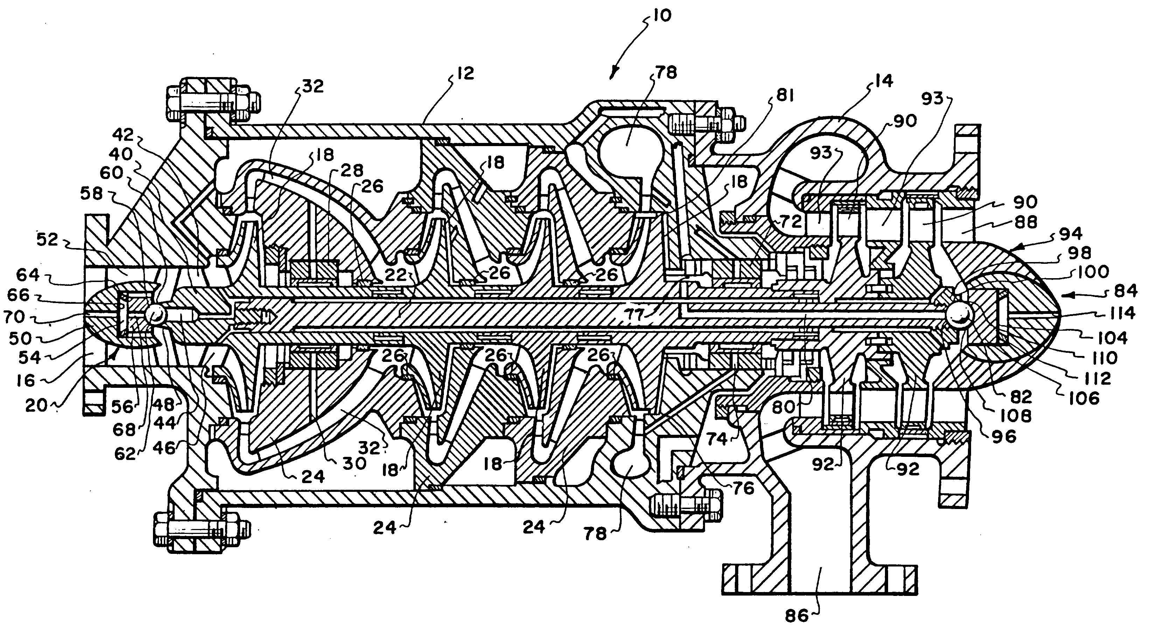

Figure 1 is a cross-section of a turbopump assembly in accordance with the present invention utilizing hydrostatic bearings and interstage seals to support high speed turbopump rotors during steady state operation while also providing thrust bearing pivots at each end of the rotor to counteract transient loads and center the rotor within the housing at startup and shutdown.

### Description of the Preferred Embodiment

The containment assemblies of this invention are illustrated in a turbopump assembly as shown in Figure 1. The turbopump assembly 10 is made up of two main parts, a forward pump section 12 and an aft turbine section 14. The forward pump section 12 includes a fluid inlet 16 which communicates with an inducer 40 and impellers 18 located within the pump section.

As seen in the drawing, a forward shaft centerline containment assembly 20 is positioned between the fluid inlet 16 and the inducer 40 at the end of the shaft. A central shaft 22 communicates between the pump section 12 and turbine section 14. Associated with central shaft 22 are stators 24.

Interstage seals 26 and hydrostatic bearings 28 and 72, are provided to restrict recirculation flow and damp vibration and movement of the rotating components during operation. Coolant passages 44 and 80 provide cooling fluid to the thrust bearing spherical members 62 and 82 from chambers 46 and 77. Said spherical members 62 and 82 may be fabricated from a ceramic material.

The forward pump section 12 contains the forward shaft centerline containment assembly 20. Assembly 20 contacts the shaft inducer 40 having pumping vanes 42 connected thereto. A coolant passage 44 within the inducer 40 communicates with pumping chamber 46 and a concave recess 48 formed within the forward end of the inducer.

At the fluid inlet 16 of the pump section 12 there is provided an ellipsoid-shaped housing 50 forward of the inducer 40. The ellipsoid-shaped housing 50 includes flow directing vanes 52 and a chamber 54 to house the centerline system axial preload spring 64 within the ellipsoid-shaped housing. A forward annular pivot retainer piston 56 within the annular chamber 54 and concave recess 58 is aligned with the concave recess 48 formed within the inducer 40 to form a unitary spherical recess. A spherical member 62 is retained in the pivot piston.

The containment assembly forward axial preload spring 64 is positioned intermediate to the base portion 66 of the pivot retainer piston 56. An axial cooling passage 68 centrally traverses the pivot retainer piston 56 and opens at the base of the pivot retainer and at the concave recess 58 formed within the aft portion of the pivot retainer. Multiple coolant grooves 60 are included in the concave recess 58 to direct the coolant to the spherical member 62. An axial passage 70 is provided to communicate coolant, and centrally traverses the ellipsoid-shaped housing 50, opens into annular chamber 54, and then communicates through the pivot retainer 56 to the spherical member 62 and the pump section fluid inlet 16.

Referring again to the Figure and in particular to the aft turbine section 14, there is shown a hydrostatic bearing 72 and operating fluid passages 74. Hydrostatic bearing 72 functions to add radial support to integral shaft 22 during operation. Hydrostatic bearing operating fluid supply passages 76 are formed in the aft portion of the forward pump section housing 12 and pump discharge chamber 78. A shaft fluid coolant and lubricant passage 80 formed within the shaft 22 further communicates with aft spherical member 82 of the aft shaft centerline containment assembly 84 as more fully discussed below. An axial thrust balance piston 81 is formed between the last pumping stage impeller 18 and the housing.

The aft turbine section 14 of the turbopump assembly 10 is provided with a turbine fluid inlet 86 and outlet 88 for admitting and expelling hot gas, or combinations of hot gas combustion products, into and out of the turbine. Turbine blades 90 are attached to turbine disk 92. Turbine flow nozzles 93 direct the drive gas into the successive stages of the turbine.

In the aft-most end of the turbine section is located the aft shaft centerline containment assembly 84. The aft shaft centerline containment assembly includes an aft containment housing 94. A shaft concave recess 96 is formed within the shaft 22 aft end. A rotor axial stackup securing nut 98 having a concave surface 100 is connected to the hollow shaft aft end. Concave recess 96 and concave surface 100 are aligned to form a unitary spherical recess contacting the aft spherical member 82 retained in the pivot piston in cooperation with the aft containment housing 94.

The aft containment housing 94 includes an annular chamber 104 and aft annular pivot retainer piston 106. A concave recess 108 is formed within a forward portion of the aft pivot retainer piston 106 and the adjacent nut 98, and is aligned with the unitary spherical recess formed by the concave nut surface 100 and shaft concave recess 96. As previously noted, spherical member 82 contacts the hollow shaft aft end until steady state operation is attained. Multiple coolant grooves 110 are provided in the concave recess 96, the shaft nut concave recess 98 and the concave recess of the aft annular pivot member 106 to distribute the coolant fluid around the aft spherical member 82. Also provided is axial preload spring 112 located within annular chamber 104. In addition, an axial vent passage 114 is provided which traverses the center of the aft containment housing 94 and communicates with annular chamber 104 and turbine section fluid outlet 88.

At standby conditions, the turbopump may be provided with propellant at the pump inlet 16 which communicates throughout the internal turbopump channels to the turbopump discharge chamber 78, the shaft fluid coolant and lubricating passages 44 and 80, and the turbine housing cavity outlet 88.

During turbopump startup, the pump inlet 16 is pressurized to a value to provide the required minimum net positive suction head to the pumping components of the inducer 40 and the impellers 18 with shaft rotation beginning as hot gases are directed into the turbine inlet 86.

Transient operation begins as the inlet fluid pressure is raised through the pumping action of the inducer 40 and impellers 18 providing coolant to the forward and aft spherical members 62 and 82 and communicates with passages 44 and 80. Coolant fluid is also provided through the inlet passages 62 and 70. As the fluid pressure is increased in the pump discharge chamber 78 by the turbopump pumping components, a coolant flow is established in the aft coolant passage 80 and is communicated to the aft spherical member 82. The turbine drive gas provides the pressure necessary at the annular section of the exposed aft pivot retainer piston 108 which when combined with the pivot retainer frontal area there is provided a force to move the aft pivot retainer piston further aft to compress the aft axial preload spring 112. In concert with this, the balance piston 81 then pulls the rotor off the forward pivot piston 62. The total aft motion is small, perhaps as little as 0.010 inch but is sufficient to disengage the shaft 22 from the spherical members 62 and 82 contact areas of the pivot supports 56 and 106. Coincident with this operation, the hydrostatic bearings 28 and 72 become operative with the addition of the fluid supply pressure. The hydrostatic bearings and the interstage seals 26 then begin to provide the necessary operational centering of the shaft 22 and rotor components.

As previously mentioned, axial motion of the shaft during steady state operation is controlled by a balance piston 81, normally located at the last stage of pumping, which is provided between the impeller 18 and the forward pump housing 12. The balance piston is a pressure actuated self balancing device which is sized to accommodate the axial forces present in the turbopump. Typical axial motions of the shaft during all stages of motion are 0.010 inch. If the balance piston were to become inoperative or the axial motions are greater than predicted during operation, the centerline containment system assemblies would provide a restraint and prevent out-of-control rotor axial motions with both the forward and aft motions constrained by the pivot supports of the containment assemblies.

At system shutdown, the reverse process takes place with the aft pivot retainer piston moving forward and capturing the shaft between the two spherical members and the pivot pistons at the pump end and the turbine end. Radial rubbing of the rotor components against the housing, particularly the impellers and the hydrostatic bearings, is eliminated.

Obviously, many modifications and variations of the present invention are possible in light of the above teachings. It is therefore to be understood that, within the scope of the appended claims, the invention may be practiced otherwise than as specifically described.

## Claims

1. In a turbopump assembly having a unitary housing and including in combination:
forward pump section (12) including a fluid inlet (16); an aft turbine section (14) including a fluid inlet and outlet;
a turbine disk (92) with blades (90);
a shaft (22) supporting the turbine disks (92) and extending axially from the turbine section into the pump section;
impellers (18) mounted on the shaft (22) in the pump section;
a balance piston;
radial bearing means (28,72) supporting the shaft (22); a disengaging forward shaft centerline containment assembly (20); and
further comprising:
a rotating inducer (40) connected at the shaft forward end;
a coolant passage (44) within the inducer (40) communicating with the shaft (22) and a concave recess (48) formed within the inducer (40);
an ellipsoid-shaped housing (50) including attached fluid flow straightening vanes (52) positioned within a fluid inlet chamber; and
a spherical member (62) retained between the inducer (40) and the ellipsoid-shaped housing (50) with a unitary spherical recess,
and wherein said ellipsoid-shaped housing (50) further includes:
an annular chamber (54) within the ellipsoid-shaped housing (50);
a forward annular pivot retainer piston (56) within the annular chamber (54);
a concave recess (58) including fluid flow grooves formed within the aft portion of the retainer nearest the rotating inducer (40) and aligned with the concave recess (58) formed at the forward end of the shaft (22); axial preload springs (64) intermediate a base portion (66) of the pivot retainer piston (56) and a surface of the inner annular chamber;
an axial cooling passage (68) centrally traversing the pivot retainer piston (56) and opening at the base portion of the pivot retainer piston (56) and the concave recess (58) formed with the aft portion of the piston; and
an axial vent passage (70) centrally traversing the ellipsoid-shaped housing (50) and opening into the annular chamber (54) and pump section fluid inlet (16), said vent passage aligned with the axial vent passage centrally traversing the pivot retainer piston; and an aft disengaging shaft centerline containment assembly (84).

2. The turbopump assembly of claim 1, wherein the aft shaft centerline containment assembly (84) further comprises:
an aft containment housing (94) formed at an aft end of the turbine section,
a concave recess (96) formed within the shaft aft end; a rotor axial stackup securing nut (98) having a concave hollow (100) in a portion thereof connected to the shaft aft end with the concave recess (96) and concave hollow (100) aligned together to form a unitary spherical recess; and
a spherical member (82) retained within the unitary spherical recess between the hollow shaft aft end and the aft containment housing (94).

3. The turbopump assembly of claim 1, wherein interstage sealing means (26), radial hydrostatic bearing means (28,72), and balance piston means are positioned along the turbopump shaft (22).

4. The turbopump assembly of claim 2, wherein the aft containment housing (94) at the aft end of the turbopump assembly further comprises:
an aft annular chamber (104);
an aft annular pivot retainer piston (106) whithin the annular chamber (104);
a concave recess (108) formed within a forward portion of a pivot retainer piston (106) nearest the rotor axial stackup securing nut (98) and axially aligned with the unitary concave recess formed by the nut concave hollow (100) and concave recess (96) formed within the hollow shaft aft end;
fluid flow grooves (110) at a surface of the pivot retainer piston proximate and communicating with the pivot retainer piston concave recess (96);
an axial preload spring (112) intermediate a base portion of the aft annular pivot retainer piston and a surface of the inner annular chamber; and
an axial vent passage centrally traversing the aft containment housing and opening into the aft end annular chamber.

5. The turbopump assembly of claim 1, wherein the spherical member (62) is fabricated from a ceramic material.

6. The turbopump assembly of claim 2, wherein the spherical member (82) is fabricated from a ceramic material.

## Patentansprüche

1. Turbopumpenbaugruppe mit einem zusammenhängenden Gehäuse, die in Kombination folgendes enthält:
- einen vorderen Pumpenabschnitt (12) mit einem Fluideinlaß (16);
- einen hinteren Turbinenabschnitt (14) mit einem Fluideinlaß und einem Auslaß;
- eine Turbinenscheibe (92) mit Blättern (90);
- eine Welle (22), die die Turbinenscheiben (92) trägt und sich axial ausgehend vom Turbinenabschnitt in den Pumpenabschnitt erstreckt;
- Laufräder (18), die im Pumpenabschnitt auf der Welle (22) angebracht sind;
- einen Ausgleichskolben;
- Radiallagereinrichtungen (28, 72), die die Welle (22) halten;
- eine vordere Wellenmittellinie-Umschließungsbaugruppe (20), die außer Eingriff gebracht werden kann; und ferner mit:
- einem rotierenden Pumpeneinlaufkranz (40), der mit dem Wellenvorderende verbunden ist;
- einem Kühlmittelkanal (44) innerhalb des Pumpeneinlaufkranzes (40), der mit der Welle (22) und einer innerhalb des Pumpeneinlaufkranzes (40) ausgebildeten konkaven Aussparung (48) in Verbindung steht;
- einem ellipsoidförmigen Gehäuse (50), das angebrachte Fluidströmungsglättungsflügel (52) enthält, die innerhalb einer Fluideinlaßkammer angebracht sind; und
- einem Kugelelement (62), das zwischen dem Pumpeneinlaufkranz (40) und dem ellipsoidförmigen Gehäuse (50) innerhalb einer durchgehenden kugelförmigen Aussparung festgehalten wird;
und wobei das ellipsoidförmige Gehäuse (50) ferner folgendes aufweist:
- eine ringförmige Kammer (54) innerhalb des ellipsoidförmigen Gehäuses (50);
- einen vorderen, ringförmigen Schwenkhalterkolben (56) innerhalb der ringförmigen Kammer (54);
- eine konkave Aussparung (58) mit Fluidströmungsnuten, die innerhalb des hinteren Abschnitts des Halters, am dichtesten beim rotierenden Pumpeneinlaufkranz (40) ausgebildet sind und mit der konkaven Aussparung (58) ausgerichtet ist, die am Vorderende der Welle (22) ausgebildet ist;
- axialen Vorbelastungsfedern (64) zwischen einem Basisabschnitt (66) des Schwenkhalterkolbens (56) und einer Fläche der inneren ringförmigen Kammer;
- einen axialen Kühlmittelkanal (68), der den Schwenkhalterkolben 56 zentrisch durchsetzt und im Basisabschnitt dieses Schwenkhalterkolbens (56) und in der konkaven Aussparung (58) geöffnet ist, die im hinteren Abschnitt des Kolbens ausgebildet ist; und
- einen axialen Belüftungskanal (70), der das ellipsoidförmige Gehäuse (50) zentrisch durchsetzt und in die ringförmige Kammer (54) und den Pumpenabschnitt-Fluideinlaß (16) geöffnet ist, wobei dieser Belüftungskanal mit dem axialen Belüftungskanal ausgerichtet ist, der den Schwenkhalterkolben zentrisch durchsetzt; und
- eine hintere Wellenmittellinie-Umschließungsbaugruppe (84), die außer Eingriff gebracht werden kann.

2. Turbopumpenbaugruppe nach Anspruch 1, bei der die hintere Wellenmittellinie-Umschließungsbaugruppe (84) ferner folgendes aufweist:
- ein hinteres Umschließungsgehäuse (94), das am Hinterende des Turbinenabschnitts ausgebildet ist;
- eine konkave Aussparung (96), die innerhalb des Wellenhinterendes ausgebildet ist;
- eine axiale Rotoraufsteck-Sicherungsmutter (98), mit einem konkaven Hohlraum (100) in einem Abschnitt derselben, der mit dem Wellenhinterende verbunden ist, wobei die konkave Aussparung (96) und der konkave Hohlraum (100) zueinander ausgerichtet sind, um eine durchgehende kugelförmige Aussparung zu bilden; und
- ein Kugelelement (82), das innerhalb der durchgehenden kugelförmigen Aussparung zwischen dem hohlen Wellenhinterende und dem hinteren Umschließungsgehäuse (94) gehalten ist.

3. Turbopumpenbaugruppe nach Anspruch 1, bei der die Zwischenstufenabdichtungseinrichtung (26), die radiale, hydrostatische Lagereinrichtung (28, 72) und die Ausgleichskolbeneinrichtung entlang der Turbopumpenwelle (22) positioniert sind.

4. Turbopumpenbaugruppe nach Anspruch 2, bei der das hintere Umschließungsgehäuse (94) am Hinterende der Turbopumpenbaugruppe ferner folgendes aufweist:
- eine hintere ringförmige Kammer (104);
- einen hinteren, ringförmigen Schwenkhalterkolben (106) innerhalb der ringförmigen Kammer (104);
- eine konkave Aussparung (108), die innerhalb des vorderen Abschnitts eines Schwenkhalterkolbens (106), der axialen Rotoraufsteck-Sicherungsmutter (98) am nächsten liegend, ausgebildet ist und axial mit der durchgehenden konkaven Aussparung ausgerichtet ist, die durch den konkaven Mutternhohlraum (100) und die konkave Aussparung (96) gebildet wird, die innerhalb des hohlen Wellenhinterendes ausgebildet ist;
- Fluidströmungsnuten (110) an einer Fläche des Schwenkhalterkolbens benachbart zur konkaven Schwenkhalterkolben-Aussparung (96), und mit dieser in Verbindung stehend;
- eine Axialvorbelastungsfeder (112) zwischen einem Basisabschnitt des hinteren, ringförmigen Schwenkhalterkolbens und einer Fläche der inneren ringförmigen Kammer; und
- ein Axialbelüftungskanal, der das hintere Umschließungsgehäuse zentrisch durchsetzt und in die ringförmige Kammer am Hinterende geöffnet ist.

5. Turbopumpenbaugruppe nach Anspruch 1, bei der das Kugelelement (62) aus einem Keramikmaterial besteht.

6. Turbopumpenbaugruppe nach Anspruch 2, bei der das Kugelelement (82) aus einem Keramikmaterial besteht.

## Revendications

1. Dans un ensemble formant turbopompe comportant un carter unitaire et comprenant en combinaison :
une partie pompe avant (12) comprenant une entrée de fluide (16) ;
une partie turbine arrière (14) comprenant une entrée de fluide et une sortie de fluide ;
un disque de turbine (92) muni d'aubes (90) ;
un arbre (22) supportant le disque de turbine (92) et s'étendant axialement depuis la partie turbine jusque dans la partie pompe ;
des roues hélices (18) montées sur l'arbre (22) dans la partie pompe ;
un piston d'équilibrage ;
des moyens formant paliers radiaux (28, 72) supportant l'arbre (22) ;
un ensemble de retenue d'axe d'arbre avant à désaccouplement (20) ; et
comprenant également :
une roue d'entrée rotative (40) montée au niveau de l'extrémité avant de l'arbre ;
un passage pour agent de refroidissement (44) prévu à l'intérieur de la roue d'entrée (40), qui communique avec l'arbre (22) et avec une concavité (48) formée à l'intérieur de la roue d'entrée (40) ;
un carter de forme ellipsoïdale (50) comprenant des ailettes de régularisation d'écoulement de fluide (52) fixées, positionnées à l'intérieur d'une chambre d'entrée de fluide ; et
un organe sphérique (62) retenu entre la roue d'entrée (40) et le carter de forme ellipsoïdale (50) par une cavité sphérique unitaire ;
et dans lequel ledit carter de forme ellipsoïdal (50) comprend en outre :
une chambre annulaire (54) définie à l'intérieur du carter de forme ellipsoïdale (50) ;
un piston de retenue à pivot annulaire avant (56) prévu à l'intérieur de la chambre annulaire (54) ;
une concavité (58) comprenant des gorges d'écoulement de fluide formée à l'intérieur de la partie arrière de l'organe de retenue, tout près de la roue d'entrée rotative (40), et alignée avec la concavité (48) formée au niveau de l'extrémité avant de l'arbre (22) ;
des ressorts de précontrainte axiale (64) situés entre une partie de base (66) du piston de retenue à pivot (56) et une surface de la chambre annulaire intérieure ;
un passage de refroidissement axial (68) qui traverse centralement le piston de retenue à pivot (56) et débouche au niveau de la partie de base du piston de retenue à pivot (56) et de la concavité (58) formée à l'intérieur de la partie arrière du piston ; et
un passage d'aération axial (70) qui traverse centralement le carter de forme ellipsoïdale (50) et débouche dans la chambre annulaire (54) et l'entrée de fluide (16) de la partie pompe, ledit passage d'aération étant aligné avec le passage d'aération axial qui traverse centralement le piston de retenue à pivot ; et
un ensemble de retenue d'axe d'arbre arrière à désaccouplement (84).

2. Ensemble formant turbopompe selon la revendication 1, dans lequel l'ensemble de retenue d'axe d'arbre arrière (84) comprend également :
un carter de retenue arrière (94) formé au niveau d'une extrémité arrière de la partie turbine,
une concavité (96) formée à l'intérieur de l'extrémité arrière de l'arbre ;
un écrou de fixation d'empilement axial de rotor (98) comportant une concavité (100) dans sa partie reliée à l'extrémité arrière de l'arbre, la concavité (96) et la concavité (100) étant alignées l'une avec l'autre pour former une cavité sphérique unitaire ; et
un organe sphérique (82) retenu à l'intérieur de la cavité sphérique unitaire entre l'extrémité arrière creuse de l'arbre et le carter de retenue arrière (94).

3. Ensemble formant turbopompe selon la revendication 1, dans lequel des moyens d'étanchéité intermédiaires (26), des moyens formant paliers hydrostatiques radiaux (28, 72), et des moyens formant piston d'équilibrage sont positionnés le long de l'arbre (22) de la turbopompe.

4. Ensemble formant turbopompe selon la revendication 2, dans lequel le carter de retenue arrière (94) situé au niveau de l'extrémité arrière de l'ensemble formant turbopompe comprend également :
une chambre annulaire arrière (104) ;
un piston de retenue à pivot annulaire arrière (106) prévu à l'intérieur de la chambre annulaire (104) ;
une concavité (108) formée à l'intérieur de la partie avant du piston de retenue à pivot (106), tout près de l'écrou de fixation d'empilement axial de rotor (98), et alignée axialement avec la concavité unitaire formée par la concavité (100) de l'écrou et la concavité (96) définie à l'intérieur de l'extrémité arrière creuse de l'arbre ;
des gorges d'écoulement de fluide (110) situées au niveau d'une surface du piston de retenue à pivot, à proximité de la concavité (96) du piston de retenue à pivot et communiquant avec celle-ci ;
un ressort de précontrainte axiale (112) situé entre une partie de base du piston de retenue à pivot annulaire arrière et une surface de la chambre annulaire intérieure ; et
un passage d'aération axial qui traverse centralement le carter de retenue arrière et qui débouche dans la chambre annulaire d'extrémité arrière.

5. Ensemble formant turbopompe selon la revendication 1, dans lequel l'organe sphérique (62) est réalisé à partir d'une matière céramique.

6. Ensemble formant turbopompe selon la revendication 2, dans lequel l'organe sphérique (82) est réalisé à partir d'une matière céramique.
